# EUROPEAN PATENT APPLICATION

(11) **EP 2 873 715 A1**
(43) Date of publication of application: **20.05.2015**
(21) Application number: 13193226.1
(22) Date of filing: 17.11.2013
(51) Int. Cl.: C10L 5/44

(54) **METHOD FOR PRODUCTION OF FUEL PELLETS**

(71) Applicant: "Latvian State Institute of Wood Chemistry" Derived public person, 1006 Riga (LV); Agency of University of Latvia "Institute of Physics of University of Latvia", Salaspils 2169 (LV)
(72) Inventor: Arshanica, Aleksandrs, LV1063 Riga (LV); Telysheva, Galina, LV1013 Riga (LV); Solodovniks, Valentins, LV1063 Riga (LV); Barmina, Inesa, LV1021 Riga (LV); Zake, Maija, LV1030 Riga (LV); Valdmanis, Raimonds, LV1030 Riga (LV)
(74) Representative: Dolgicere, Nina

(57) **Abstract**

The present invention relates to a method for production of fuel pellets from lignocellulosic materials, namely, grass, straw, wood, sawdust, bark and agricultural residues.

According to the present invention the object of this invention is achieved by a method for obtaining fuel pellets by mixing preliminary ground lignocellulosic raw material with a binding agent with the further pelletization of obtained mixture, wood bark is used as the binding agent in the amount of 10-20.% by weight of mixture, from which biologically active compounds are extracted with the use of organic solvents.

The object of the present invention is achieved by that birch outer bark is used as bark, from which lupeol and betulenol are preliminary extracted, as well as bark of white alder, from which lipophilic compounds, diarylheptanoids and condensed tannins are preliminary extracted.

The use of extracted bark of alder and extracted birch outer bark as the additive for pelletization of ground straw:
Increases heating value of pellets
Increases bulk density of pellets
Decreases ash-content of pellets
Increases energy density of pellets
Increases parameters of attrition resistance of pellets
Decreases the yield of fine unpelletized biomass
Pellets on the basis of extracted bark of white alder differ from pellets on the basis of raw bark by higher heating value, higher energy density and higher attrition resistance.

## Description

### Technical Field

The present invention relates to a method for production of fuel pellets from lignocellulosic materials, namely, grass, straw, wood, sawdust, bark and agricultural residues.

### Background Art

Fuel pellets represent a pelletized substance made from plant materials, which may be used in heating plant.

Within the last years the attention has been focused on the environmental problems, particularly, on the problem connected with carbon dioxide emission during combustion of fossil fuels: coal, petroleum, petroleum products, and gas.

Conventional renewable sources of energy include wood chips, sawdust, and wood bark, from which fuel pellets are obtained. Various methods of treatment of plant material biomass before pelletization are known. According to one of these methods the treatment is carried out by introducing wood material into a reactor with the following steam addition for heating of the material, an exposure at an elevated temperature and further pressure decrease. After such treatment a modified lignin forms a cover on particles and more effectively fulfils the function of a binding agent. Then the product is dried and pelletized (RU2369631C2 and US2009/02533943). Obtained pellets have shape stability, however, the combustion thereof results in rather high soot level.

To obtain pellets from plant material biomass, biological materials should be treated by superheated steam at a temperature of 180-235°C (RU2011129312 A). Such treatment unavoidably results in hydrolysis of a hemicellulosic component that results in release of acidic acid, furfurol and derivatives thereof that negatively affect ecosystem. The increase of the temperature of treatment up to 350°C results in the increase of biomass degradation level, and correspondingly, in the release of a great amount of ecologically harmful volatile products that requires application of air or water purification systems (in case of condensation of gaseous products).

The method for production of fuel pellets from plant material mixture, wherein diesel oil is introduced into the pellets (RU2402598C2) is known. However, these pellets are inflammable ones, and in storage the ecological characteristics of a fuel are worsened due to the release of dangerous vapors into the atmospheric air of storage premises.

The closest is the method of production of fuel pellets from plant lignocellulosic raw material, wherein an outer layer of birch bark or white alder bark are used as a binding agent (LV14741A). An essential disadvantage of this method is a low efficiency of the use of wood bark, which is a valuable renewable raw material. According to this method only energy constituent of bark is used, and bark is not used as a renewable raw material for obtaining products with high added value. Wood bark compared to stem wood is characterized by high concentration of extractive compounds including biologically active compounds, and compounds, which are used in chemical industry but at present are obtained from fossil raw materials.

### Summary of invention

It is the object of the present invention to provide the method for production of fuel pellets from plant lignocellulosic raw material with high energy and ergonomic features by providing a multipurpose use of binding agents including energy value and renewability thereof.

According to the present invention the object of this invention is achieved by a method for obtaining fuel pellets by mixing preliminary ground lignocellulosic raw material with a binding agent with the further pelletization of obtained mixture, wood bark is used as the binding agent in the amount of 10-20.% by weight of mixture, from which biologically active compounds are extracted with the use of organic solvents.

The object of the present invention is achieved by that birch outer bark is used as bark, from which lupeol and betulenol are preliminary extracted, as well as bark of white alder, from which lipophilic compounds, diarylheptanoids and condensed tannins are preliminary extracted.

### Detailed Description of the Invention

The method according to the present invention is carried out in the following manner. Preliminary ground plant lignocellulosic raw material is dried up to moisture content of 12-14%, and the residue of bark after extraction of valuable chemical compounds and removal of solvents are condensed up to moisture content of 12-14%, and further are mixed with plant raw material and the mixture is subjected to pelletization. The method according to the present invention meets modern requirements of maximum possible use of raw material potential and provides the development of processing clusters of production of by-products, in this case, along with the release of valuable chemical compounds from bark, the use of the residue upon the extraction as binding agent for production of fuel pellets.

### Description of embodiments

### Examples

### Example 1.

3.5 kg of wheat straw with moisture content of 18-20%, preliminary ground on hammer mill with mesh size 4.0 mm is dried in a draught cupboard at a temperature of 20-25 °C and ϕ=50-60% up to the value of relative moisture of 12-14%. Approximately 2.0 kg of the residue of birch outer bark after the extraction by ethanol or cyclohexane and with a particle size ≤2,0 mm is placed in the forced convection draught cupboard at 50 °C, and is kept up to constant weight. Upon the removal of solvent residue, biomass is moistened by adding an estimated amount of water and after keeping (conditioning) in hermetically sealed container up to the value of relative moisture of 12-14%. Ground straw is mixed with an estimated amount of extracted birch outer bark in a closed mixer with axially arranged agitator shaft during 60 min. whereupon the mixture is pelletized with the use of flat matrix laboratory press KAHL. For pelletization, a matrix of 2.4 mm thickness and with the channel diameter of 6.0 mm is used.

### Example 2.

3.5 kg of wheat straw with moisture content of 18-20%, preliminary ground on hammer mill with mesh size 4.0 mm is dried in a draught cupboard at a temperature of 20-25 °C and ϕ=50-60% up to the value of relative moisture of 12-14%. 2.0 kg of the residue of alder bark after three-stage extraction by solvents of different polarity is placed in a forced convection draught cupboard at 50°C and is kept up to a constant weight to remove solvent residue. Then biomass is moistened by adding an estimated amount of water and after keeping (conditioning) in hermetically sealed container up to the value of relative moisture of 12-14%. Ground straw is mixed with an estimated amount of extracted white alder bark in a closed mixer with axially arranged agitator shaft during 60 min. Whereupon, the mixture is pelletized with the use of flat matrix laboratory press KAHL. For pelletization, a matrix of 2.4 mm thickness and with the channel diameter of 6.0 mm is used.

Characteristics of obtained fuel pellets are given in the Tables below.

**Table 1.The effect of addition of extracted birch outer bark on the characteristics of pellets obtained from wheat straw**

| | Parameters | Units of measurement | Extracted bark of white alder,%*of mixture weight | |
|---|---|---|---|---|
| | | | 0 | 20 |
| | Ground biomass moisture , W | % per moist sample | 12.8 | 13.1 |
| | Moisture of obtained pellets , W | % per moist sample | 10.4 | 9.7 |
| | Ash content | % per dry sample | 7.1 | 6.4 |
| | Oxygen content | % per dry sample | 41.8 | 43.4 |
| | Hydrogen content | % per dry sample | 6.15 | 6.10 |
| | Nitrogen content | % per dry sample | 0.85 | 0.95 |
| | Highest heating value, per dry sample | MJ/kg, | 16.7 | 17.3 |
| Lowest heating value, per dry sample | | MJ/kg | 15.3 | 15.9 |
| Highest heating value, per moist sample | MJ/kg, | 14.9 | 15.6 | |
| Lowest heating value, per moist sample | MJ/kg | 13.5 | 14.2 | |
| Diameter of pellets | mm | 6.27±0.08 | 5.96±0.04 | |
| Length of pellets | mm | 15.4±2.6 | 16.6±1.9 | |
| Bulk density of ground biomass | kg/m³ | 130±2 | 187±2 | |
| Bulk density of pellets | kg/m³ | 518±2 | 727±8 | |
| Energy density by volume | MWh/m³ | 1.94 | 2.87 | |
| Attrition resistance (mechanical wear resistance of pellets) | % | 78.4 | 97.6 | |
| Yield of a final product (pellets) | % | 46.4 | 95.6 | |

| | | | | |
|---|---|---|---|---|
| *- residue after the removal of lupeol and betulenol 1- solvent (cyclohexanone); 2- sovent (ethanol) | | | | |

**Table 2 The effect of addition of extracted bark of white alder on the characteristics of pellets obtained from wheat straw**

| Parameters | Units of measureme nt | Extracted bark of white alder,%*of mixture weight | |
|---|---|---|---|
| | | 0 | 20 |
| Ground biomass moisture , W | % per moist sample | 12.8 | 13.1 |
| Moisture of obtained pellets , W | % per moist sample | 10.4 | 9.7 |
| Ash content | % per dry sample | 7.1 | 6.4 |
| Oxygen content | % per dry sample | 41.8 | 43.4 |
| Hydrogen content | % per dry sample | 6.15 | 6.10 |
| Nitrogen content | % per dry sample | 0.85 | 0.95 |
| Highest heating value, per dry sample | MJ/kg, | 16.7 | 17.3 |
| Lowest heating value, per dry sample | MJ/kg | 15.3 | 15.9 |
| Highest heating value, per moist sample | MJ/kg, | 14.9 | 15.6 |
| Lowest heating value, per moist sample | MJ/kg | 13.5 | 14.2 |
| Diameter of pellets | mm | 6.27±0.08 | 5.96±0.04 |
| Length of pellets | mm | 15.4±2.6 | 16.6±1.9 |
| Bulk density of ground biomass | kg/m³ | 130±2 | 187±2 |
| Bulk density of pellets | kg/m³ | 518±2 | 727±8 |
| Energy density by volume | MWh/m³ | 1.94 | 2.87 |
| Attrition resistance (mechanical wear resistance of pellets) | % | 78.4 | 97.6 |
| Yield of a final product (pellets) | % | 46.4 | 95.6 |

| | | | |
|---|---|---|---|
| Extracted bark of white alder - residue after separation of lipophilic compounds, diarylheptanoids and condensed tannins with the following extraction of bark by solvents of different polarity (hexane, ethylacetate, ethanol). Residue - 70-80% | | | |

**Table 3 Characteristics of pellets**

| Parameters | Units of measur ement | Bark of white alder | Wheat straw 80%+ 20% Bark of white alder | Wheat straw 80% + 20% Extracte d birch outer bark¹ | Wheat straw 90% + 10% Extracted birch outer bark² | Wheat straw 80 %+ 20% Extracted birch outer bark² |
|---|---|---|---|---|---|---|
| Ground | % per | 10.0 | 13.1 | 13.4 | 12.4 | 12.7 |
| biomass moisture , W | moist sample | | | | | |
| Moisture of obtained pellets , W | % per moist sample | 7.0 | 9.7 | 7.8 | 7.3 | 8.1 |
| Ash content | % per dry sample | 3.52 | 6.4 | 5.76 | 6.46 | 5.81 |
| Oxygen content | % per dry sample | 51.62 | 43.4 | 47.2 | 44.6 | 46.5 |
| Hydrogen content | % per dry sample | 6.67 | 6.10 | 6.63 | 6.43 | 6.54 |
| Nitrogen content | % per dry sample | 1.38 | 0.70 | 0.76 | 0.81 | 0.77 |
| Highest heating value, per dry sample | MJ/kg, | 21.0 | 17.3 | 18.9 | 17.6 | 18.6 |
| Lowest heating value, per dry sample | MJ/kg, | 19.5 | 15.9 | 17.4 | 16.2 | 17.1 |
| Highest heating value, per moist sample | MJ/kg, | 19.5 | 15.6 | 17.4 | 16.3 | 17.1 |
| Lowest heating value, per moist sample | MJ/kg | 18.0 | 14.2 | 15.9 | 14.8 | 15.6 |
| Diameter of pellets | mm | 5.92±0.0 1 | 5.96±0.0 4 | 5.89±0.0 2 | 6.05±0.0 9 | 6.00±0.06 |
| Length of pellets | mm | 17.4±1.9 | 16.6±1.9 | 17.5±0.7 | 16.4±2.0 | 15.3±3.7 |
| Bulk density of ground biomass | kg/m³ | 336±10 | 187±2 | 161±2 | 164±2 | 189±2 |
| Bulk density of pellets | kg/m³ | 702±2 | 727±8 | 670±7 | 691±1 | 653±2 |
| Energy density by volume | MWh/m ³ | 3.51 | 2.87 | 2.96 | 2.84 | 2.82 |
| Attrition resistance (mechanical wear resistance of pellets) | % | 98.1 | 97.6 | 96.2 | 99.5 | 97.7 |
| Yield of a final product (pellets) | % | 99.5 | 95.6 | 99.6 | 99.4 | 99.1 |

Energy density is one of the most important features of fuel pellets made from biomass. The increase of energy in a unit of volume of plant material biomass is the main purpose of various technologies of granulation and pelletization. The analysis of obtained results shows that the use of extracted birch outer bark additives increases the energy density of pellets on the basis of straw by 45-52.5%.

The value of energy density is affected by two parameters: heating value of biomass and bulk density of pellets, which correlates with the density of separate pellets. According to the claimed method upon the addition of extracted birch outer bark the lowest heating value (per moist basis) of straw pellets increases by 10-17%, while the increase of bulk weight amounts to 29-33% that demonstrates high binding features of a selected additive. The introduction of the binding agent results in the increase of the parameters of abrasion resistance of pellets by 17.8-21.4 units. In case of pelletization of straw the addition of extracted birch outer bark as the binding agent increased the yield of pellets from 46.4% to 99.8%.

Apart from the above, owing to the instruction of the additive the decrease of ash-content of pellets is achieved compared to pure straw pellets.

Birch outer bark is characterized by high (30-40%) content of suberin (a mixture of aliphatic C₁₈-C₂₂ saturated and unsaturated carboxylic oxy- and epoxy-acids) that determines the high heating value thereof (∼32-33 MJ/kg). Suberin, which is present in birch outer bark, when heated represents film-forming features and may act as the binding agent owing to the processes of intermolecular condensation and condensation with macromolecules of other constituents of lingo-carbohydrate complex. When pelletized on a matrix press, biomass temperature reaches 100°C that makes possible the processes of condensation of suberin with the constituents of lingo-carbohydrate complex to be carried out when being introduced into a pelletized composition of birch outer bark.

The introduction of terpenoids from birch outer bark (lupeol, betulenol) does not affect suberin insoluble in utilized solvents, and which is released only upon alkaline treatment of birch outer bark. As the result of the removal of terpenoids the concentration of suberin in the residue is increased that is a positive factor when using the residue of birch outer bark as an additive when pelletizing lignocellulosic biomass, and contemplates a great effect rather of the introduction of extracted birch outer bark than of the introduction of raw birch outer bark.

Therefore, the introduction of extracted birch outer bark as an additive when pelletizing lignocellulosic biomass (wheat straw) resulted in the increase of the main combustion characteristics of pellets: heating value, energy density and mechanical stability, while decreasing the input of fine fraction of biomass when pelletizing. Maximum values of energy density have been achieved upon the introduction of 20% of birch outer bark extracted by cyclohexane. When using birch outer bark extracted by ethanol, the significant effect has been achieved upon the introduction of 10% of the additive. The increase of the concentration of the additive up to 20% actually has not affected further modification of the parameter of energy density (Table 1).

The use of extracted bark of white alder as the additive when pelletizing straw demonstrates the increase of energy density by 45.6% in comparison to straw pellets that may be compared with the effect of the introduction of extracted birch outer bark.

The increase of the parameters of attrition resistance of pellets and the yield of pelletized biomass is less significant than in case of the use of extracted birch outer bark but is significantly more than the parameters for pure straw pellets (Tables 2- 3). When removing extracted compounds in the residue of white alder bark, increased is the concentration of lignin component, which has the highest heating value among all main components of lignocellulosic biomass.

The high plasticity and high binding characteristics of extracted bark, the addition of which ensures the increase of density and attrition resistance of straw pellets may be attributable to the highest concentration of lignin, which is softened during the transition to high-elastic state when being heated in the process of pelletization.

### Industrial applicability

The use of extracted bark of alder and extracted birch outer bark as the additive for pelletization of ground straw:
- Increases heating value of pellets
- Increases bulk density of pellets
- Decreases ash-content of pellets
- Increases energy density of pellets
- Increases parameters of attrition resistance of pellets
- Decreases the yield of fine unpelletized biomass (Tables 1-2).

Pellets on the basis of extracted bark of white alder differ from pellets on the basis of raw bark by higher heating value, higher energy density and higher attrition resistance.

## Claims

1. A method for production of pellets by mixing preliminary ground lignocellulosic plant raw material with a binding agent, and further pelletization of obtained mixture, **characterized in that** wood bark is used as the binding agent in the amount of 10-20% by weight of mixture, from which biologically active compounds are extracted by organic solvents.

2. A method according to claim 1, **characterized in that** birch outer bark, from which lupeol and betulenol are preliminary extracted, is used as bark.

3. A method according to claim 1, **characterized in that** bark of white alder, from which lipophilic compounds, diarylheptanoids and condensed tannins are preliminary extracted, is used as bark.

4. A method according to claim 1, **characterized in that** lignocellulosic plant raw material is preliminary dried up to the moisture content of 12-14%

5. A method according to claim 1 or claim 3, **characterized in that** the residue of bark of white alder after the extraction of lipophilic compounds, diarylheptanoids and condensed tannins, and after the removal of solvents, is conditioned up to the moisture content of 12-14%.
